(19) Europäisches Patentamt / European Patent Office / Office européen des brevets

(11) **EP 4 507 179 A1**

(12) **EUROPEAN PATENT APPLICATION**

(43) Date of publication:
**12.02.2025  Bulletin 2025/07**

(21) Application number: **23382840.9**

(22) Date of filing: **11.08.2023**

(51) International Patent Classification (IPC):
*H02M 3/335* $^{(2006.01)}$

(52) Cooperative Patent Classification (CPC):
**H02M 1/10; H02M 3/33507; H02M 3/3353;
H02M 3/33571; H02M 3/33573; H02M 3/33584;
H02M 3/33592**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Differential Power, SL
28042 Madrid (ES)**

(72) Inventor: **COBOS MARQUEZ, Jose Antonio
28042 Madrid (ES)**

(74) Representative: **Torner, Juncosa I Associats, SL
C / Pau Claris, 108, 1r 1a
08009 Barcelona (ES)**

(54) **A SWITCH MODE ELECTRICAL POWER CONVERTER**

(57)    A switch mode electrical power converter is proposed. It comprises a primary port; a secondary port; a third port; a primary power switch; a secondary power switch; a third power swich; and a transformer or auto-transformer. The primary, secondary and third power switches are configured to apply to a primary winding of the transformer or autotransformer: a voltage higher than a voltage in the primary port, to produce a positive derivative of a secondary electric current during a first interval, a voltage equal to a voltage in the primary port, to transfer energy from the primary port to the secondary port during a second interval, a duty cycle being the addition of the first interval plus the second interval, and a negative voltage to produce a negative derivative of the secondary electric current and to demagnetize the transformer or autotransformer during a third interval, which is referred to as 1 minus the duty cycle.

Fig.3A

## Description

Technical Field

The present invention generally relates to the field of electrical power converters. More specifically, the invention relates to a switch mode electrical power converter, which can process and exchange, bi-directionally, electrical power from a DC or AC input energy source to a DC or AC output load.

Background of the Invention

An electrical power converter in which power switches connect an input DC or AC energy source to a DC or AC output load is known by EP4059128, of the same applicant of present invention. As seen in Fig. 1, the electrical power converter comprises a primary port; a secondary port; a primary power switch; a secondary power switch; and a transformer or autotransformer to connect the primary port with the secondary port through the primary power switch and the secondary power switch. According to the EP4059128, the cited power switches are operated simultaneously, forming a Direct electrical power converter (DPx).

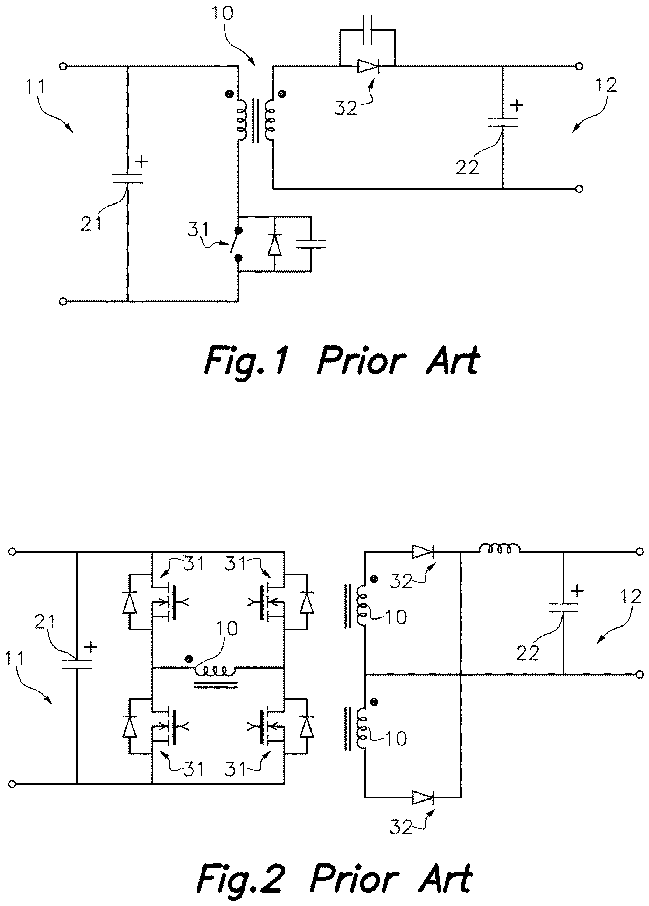

On the other hand, a full-bridge converter, see Fig. 2, generally comprises a buck converter including a transformer driven by a bridge of power switches. The DC input voltage is applied to the primary winding of the transformer switching ON and OFF the power switches of the bridge in a diagonal manner, such that both positive and negative voltages are applied to the primary winding of the transformer.

In the secondary side, two diodes apply both the positive voltage and the rectified negative voltage of the secondary windings of the transformer to the LC output filter of the original buck converter.

The full-bridge converter provides a regulated voltage gain but requires two magnetic components and the dynamic response is limited by the output inductor. This means that the output current injected by the converter to the load has a lower di/dt than that required by the load, especially in the case of high-performance digital circuits. The difference between the current injected by the power converter and the current demanded by the load must be provided by a large capacitance, increasing volume and cost of the power supply architecture.

The DPx converter only has one magnetic component, the transformer or autotransformer. Both switches in the primary and secondary sides are in ON state simultaneously, during a time interval that can be higher than 50% of the switching period. This high duty cycle, which may have values as high as 95%, reduces the rms value of the current flowing through the power switches, hence conduction losses are lower than state of the art power converters.

However, DPx converter cannot regulate the voltage gain nor supply controlled load steps.

New switch mode electrical power converters that enable/allow gain regulation and controlled load steps with just one magnetic component are therefore needed.

Description of the Invention

To that end, the present invention proposes a switch mode electrical power converter that, similar to the known solutions, comprises a primary port that includes at least one primary capacitance connected in parallel; a secondary port that includes at least one secondary capacitance connected in parallel; at least one primary power switch; at least one secondary power switch; and a transformer or autotransformer to connect the primary port with the secondary port through the at least one primary power switch and the at least one secondary power switch.

It should be noted that DC-DC converters have a capacitor, or a capacitive effect, connected in parallel with each DC port. The reason behind this is to maintain the DC voltage during the time periods of the swich mode power supply. If this capacitance did not exist, the voltage would drop every time the power switches of the power converter turn ON or OFF, producing undesirable glitches. This is due to the parasitic inductances in the circuit.

Furthermore, it is well known in literature and textbooks that DC-DC converters may be used as AC-DC converters for what is called a "low frequency AC voltage" (see textbook "Fundamentals of Power Electronics"). The "low frequency" term refers to a frequency which is orders of magnitude lower than the switching frequency of the power converter. For this condition, the change of the AC voltage within a switching cycle is negligible; hence the voltage in the port may be considered DC. Typical examples are "Power Factor Correction, PFC" power supplies, whose switching frequency may be 100kHz, being 2.000 times higher than the line frequency (50Hz). During the switching frequency period of $10\mu s$, the AC voltage variation is negligible since the line cycle takes 20ms.

For both cases, DC or AC voltage applied to the port, a capacitor or capacitance is inherent part of the circuit, even though in many cases it is not drawn in the circuits as it is in parallel with an ideal DC or AC voltage source. Nevertheless, since ideal voltage sources do not exist a capacitor or capacitance is present in parallel with the port.

In the proposed switch mode electrical power converter, i) the mean voltage of the transformer or autotransformer is zero in steady state, ii) the secondary winding of the transformer or autotransformer can inject a secondary electric current to the secondary port through the secondary power switch, and iii) the at least one primary power switch and the at least one secondary power switch are configured to conduct simultaneously to transfer energy from the primary port to the secondary port through the transformer or autotransformer.

Characteristically, the proposed switch mode electrical power converter further comprises at least one third port that includes at least one third capacitance connected in parallel, and at least one third power switch.

Moreover, the primary power switch, the secondary power switch and the third power switch are configured to apply, to the primary winding of the transformer or autotransformer, a specific voltage waveform that includes:

a) a voltage, $v_{rise}$, higher than the voltage in the primary port, to produce a positive derivative of the secondary electric current during a first interval,
b) a voltage, $v_{transfer}$, equal to the voltage in the primary port, to transfer energy from the primary port to the secondary port during a second interval, a duty cycle being the addition of the first interval plus the second interval, and
c) a negative voltage, $v_{demag}$, to produce a negative derivative of the secondary electric current and to demagnetize the transformer or autotransformer during a third interval, which is referred to as 1 minus the duty cycle.

In one embodiment, the at least one primary power switch and the at least one third power switch are configured to apply said specific voltage waveform defined in a), b) and c) based on driving signals that turn the primary power switch and the third power switch to an ON and/or OFF state. Particularly, in the present invention, said driving signals are generated by a modulator that is configured to receive the first interval value and the duty cycle value as inputs, the first interval and the duty cycle being calculated by a regulator based on sensed output, input or internal variables of the switch mode electrical power converter.

In one embodiment, the at least one secondary power switch is also configured to apply said specific voltage waveform defined in a), b) and c) based on driving signals that turn the secondary power switch to an ON and/or OFF state. In this case, said driving signals can have a phase-shift to enable ZVS in the primary power switch/es and the third power switch/es.

In one embodiment, the secondary port further comprises a load connected thereto.

Moreover, the first interval and the duty cycle are particularly configured to adjust the mean value of the secondary electric current to a load current, and to adjust a voltage of the third port using the following equation:

$$d = \frac{v_{demag} - \theta \cdot (v_{rise} - v_{transfer})}{v_{transfer} + v_{demag}},$$

where:

$v_{rise} = f(v_{port1}, v_{port3}, v_{port2})$
$v_{transfer} = g(v_{port1}, v_{port3}, v_{port2})$
$v_{demag} = h(v_{port1}, v_{port3}, v_{port2}).$

In one embodiment, the first interval and the duty cycle are further configured to change the adjusted mean value of the secondary electric current from a switching cycle of the switching frequency of the switched mode electrical power converter to the next switching cycle.

In some embodiments, the switched mode electrical power converter comprises two primary power switches and two third power switches connected through a full-bridge configuration with the primary winding of the transformer or autotransformer.

According to a first embodiment, the primary port can be connected in series with the two primary power switches, and the third port can be connected to a positive voltage rail and to a negative voltage rail of the full-bridge. In fact, the primary port may be connected to any of the four power switches of the full-bridge, as long as the corresponding terminals of the transformer or autotransformer are connected in such a way that when the primary power switches and the secondary power switches are in the ON state there is energy transfer from the primary port to the secondary port.

Alternatively, according to a second embodiment, the primary port can be connected in series with the two primary power switches, and the third port can be connected, via a connection point of the primary port, with the two primary power switches, and to a voltage rail of the full-bridge connected to the two third power switches.

In the previous two embodiments, the voltage of the primary port can be a DC voltage or a rectified low frequency AC voltage.

According to a third embodiment, the third port can be connected to a DC voltage source; thus the energy transferred from the primary port to the secondary port can be converted from the DC voltage source to the primary capacitance through the full-bridge configuration. Particularly, this power conversion is performed by the magnetizing inductance of the transformer or autotransformer. In fact, the transformer or autotransformer is utilized in a double function: i) to transfer power from the primary port to the secondary port; and ii) to store and deliver energy from the third port to the primary port through the magnetizing inductance. This way, only one magnetic component is the path for two different power conversion flows among the three ports of the switched mode electrical power converter.

According to a fourth embodiment, the primary port is connected to an AC voltage source and in series with the transformer or autotransformer, and the third port is connected to the positive voltage rail and to the negative voltage rail of the full-bridge.

In one embodiment, the secondary power switch is connected in series with the secondary winding of the transformer or autotransformer and with the secondary port.

In another embodiment, the switch mode electrical power converter comprises two secondary power switches and two secondary capacitances, the secondary winding of the transformer or autotransformer, the two secondary power switches and the two secondary capacitances being connected through a half-bridge configuration.

In yet another embodiment, the switch mode electrical power converter comprises four secondary power switches, the secondary winding of the transformer or autotransformer and the four secondary power switches being connected through a full-bridge configuration.

In a particular embodiment, a primary side comprises two primary power switches and two third power switches connected through a full-bridge configuration, the primary port being connected to an AC voltage source and in series with the transformer or autotransformer, and the third port being connected to a positive voltage rail and to a negative voltage rail of the full-bridge; a secondary side comprises two secondary power switches and two secondary capacitances, the secondary winding of the transformer or autotransformer, the two secondary power switches and the two secondary capacitances being connected through a half-bridge configuration, which is connected to the load; and the first interval and the duty cycle are configured to regulate a voltage of the secondary port and a current of the primary port.

More specifically, the switch mode electrical power converter may be operated as an AC-DC power converter if the AC power frequency is orders of magnitude lower than its switching frequency. In this case, the two primary power switches and the two third power switches can interchange their roles during the positive and negative AC cycles. As an example, if during the positive AC cycle the two power switches on the top side of the bridge operate as primary power switches and the two bottom power switches of the bridge operate as third power switches, then during the negative AC cycle the two power switches on the top side of the bridge operate as third power switches and the two bottom power switches of the bridge operate as primary power switches.

In yet another embodiment, a primary side comprises two primary power switches and two third power switches connected through a full-bridge configuration, the primary port being connected in series with the two primary power switches, and the third port being connected, via a connection point of the primary port, with the primary power switches, and to the positive voltage rail of the full-bridge connected to the third power switches, the voltage of the primary port being a DC voltage or a rectified low frequency AC voltage; a secondary side comprises the secondary power switch connected in series with the secondary winding of the transformer or autotransformer and with the secondary port; and the first interval and the duty cycle are configured to regulate a voltage of the secondary port and a current of the primary port.

In some embodiments, the duty cycle can be configured to regulate the voltage of the secondary port, and the first interval can be configured to regulate the current of the primary port to be proportional to the voltage of the primary port.

The proposed switch mode electrical power converter can comprise a plurality of stacked (i.e. several primary ports stacked together) or parallel primary ports and/or a plurality of stacked (i.e. several secondary ports stacked together) or parallel secondary ports.

In some embodiments, the driving signals of the stacks can be phase-shifted, reducing the current and/or voltage ripple in the three ports.

The proposed switch mode electrical power converter is advantageous for high voltage gain, low output voltage and high output current applications, specifically to supply high performance digital circuits. In such digital systems, high voltage gain is required to supply the chip at <1V from a 48V dc voltage bus. Moreover, it is advantageous because it includes a transformer or autotransformer to scale voltage and current. Furthermore, the chips require very high current, in the order of hundreds or thousands amperes. Conduction losses are the main source of losses in state-of-the-art converters. The proposed switch mode electrical power converter has low rms current flowing through the power components because it is operated with high duty cycle in both primary and secondary power switches.

A unique advantage of the switch mode electrical power converter is the dynamic response. The chips require current steps higher than 1.000 A/us, which cannot be supplied by state-of-the-art power converters that have an inductor in the output stage, as it is the case of buck converter and its variations (Forward, Half-bridge, Full-bridge, Push-pull, Cuk, etc.). In the proposed switch mode electrical power converter there is no output inductor, but just a transformer or autotransformer in which energy transferred may change instantaneously form one switching cycle to the next. In fact, the current injected to the output capacitor is the current flowing through the secondary winding of the transformer or autotransformer, which may change at a rate defined by the leakage inductance of the transformer or autotransformer and the voltage applied to the transformer or autotransformer.

This current is in fact commanded by the voltage in the primary winding of the transformer or autotransformer. The proposed voltage waveform includes a voltage higher than the voltage in the primary port to generate the positive di/dt and a negative voltage to generate the negative di/dt and to demagnetize the transformer or autotransformer. The purpose of the third port is to contribute to generate the required voltage in the transformer or autotransformer. The voltage in the third port may be generated by the switch mode electrical power converter itself or be an external voltage source.

In case that it is generated internally taking energy from the voltage source connected to the primary port, this power conversion is performed by the magnetizing inductance of the transformer or autotransformer. In fact, the transformer or autotransformer is used in a double function: for transferring power from the primary port to the secondary port on one hand, and for storing and delivering energy from the first port to the third port through the magnetizing inductance. This way, only one magnetic component is the path for two different power conversion flows among the three ports of the switch mode electrical power converter.

This characteristic enables its advantageous use in another application, which is the AC-DC power conversion with power factor correction. Typically, two power conversion stages are needed, one for regulation of the output voltage and another to take an input current proportional to the input voltage, so that power factor is close to one.

While in typical AC-DC power conversion with power factor correction converters at least two magnetic components are needed, the proposed switch mode electrical power converter can perform the same function with just one magnetic component, which is a significant advantage in terms of volume and cost.

Brief Description of the Drawings

The previous and other advantages and features will be more fully understood from the following detailed description of embodiments, with reference to the attached figures, which must be considered in an illustrative and non-limiting manner, in which:

Fig. 1 illustrates a Direct Electrical power converter (DPx), according to the prior art.

Fig. 2 illustrates a Full-bridge converter, according to the prior art.

Fig 3A. illustrates a generic embodiment of the proposed switch mode electrical power converter, in which the primary winding of the transformer is connected to a primary side circuit that generates the proposed voltage waveform, and the secondary winding of the transformer is connected to the secondary side. Fig. 3B illustrates the same circuit as Fig. 3A, replacing the actual transformer by its model, used for circuit analysis.

Fig. 4 graphically illustrates the voltage waveform in the primary winding of the transformer to generate the waveform of the secondary electric current ($i_{sec}$).

Fig. 5 illustrates the building blocks of the controller of the switched mode electrical power converter, including the regulator that calculates the control variables $d$ and $\theta$ using the values of the sensed variables and the modulator that generates the driving signals of the power switches.

Fig. 6 graphically illustrates a load current step and the immediate response in the next switching cycle of the switch mode electrical power converter configured with four interleaved stacked primary sides. The immediate change in the control variable $\theta$ produces minimal deviation of the output voltage of the power converter.

Figs. 7A-7E illustrate different configurations of the primary side, according to different embodiments of the present invention.

Fig. 8A-8C illustrate different configurations of the secondary side, according to different embodiments of the present invention.

Fig. 9 graphically illustrates current and voltage waveforms resulted for the embodiment of Figs. 3A and 3B.

Fig. 10A-10B illustrate two particular embodiments of the proposed switch mode electrical power converter to implement an AC-DC converter with power factor correction.

Fig.11A illustrates the main waveforms of the AC-DC converter with power factor correction for a line angle of 90° in which the voltage source connected in the primary port supplies the output power connected in the secondary port and charges the third capacitance, that can act as a storage capacitor, connected to the third port.

Fig. 11B illustrates the main waveforms of the AC-DC converter with power factor correction for a line angle of 45° in which the voltage source connected in the primary port supplies the output power connected in the secondary port and the power flowing to the third capacitance, that can act as storage capacitor, connected to the third port is zero.

Fig. 11C illustrates the main waveforms of the AC-DC converter with power factor correction for a line angle of 30° in which the voltage source connected in the primary port supplies only a fraction of the output power connected in the secondary port and the remainder fraction of the output power is supplied by the third capacitance, that can act as storage capacitor, connected to the third port.

Detailed Description of the Invention and of Preferred Embodiments

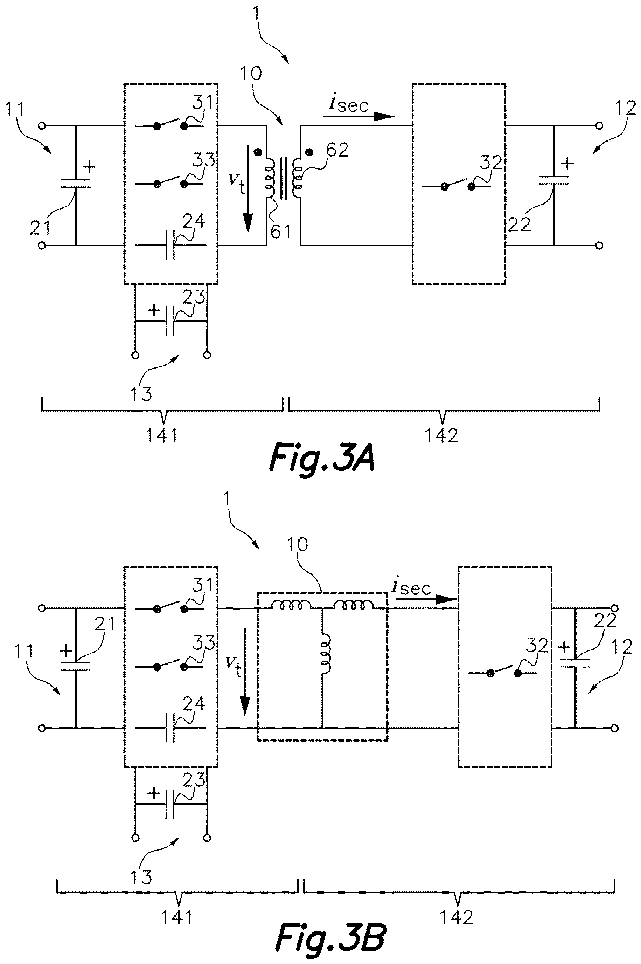

Figs. 3A and 3B show an embodiment of the proposed switch mode electrical power converter 1, or simply power converter 1 from now on. According to this embodiment, the power converter 1 comprises a primary side 141 connected to a secondary side 142 through a transformer or autotransformer 10. The secondary side 142 can be isolated in case of using a transformer and non-isolated in case of using an autotransformer. Note that the only difference between both figures is that in Fig. 3B the equivalent circuit of the transformer or autotransformer 10 is illustrated.

Specifically, in this generic embodiment, the primary side 141 comprises a primary port 11 having connected thereto a primary capacitance 21 in parallel, a primary power switch 31, a third port 13 having connected thereto a third capacitance 23 in parallel, and a third power switch 33. In some other embodiments, the primary side 141 may, optionally, further include some additional capacitances (see element 24) forming a switched capacitor network. On the other hand, the secondary side 142 comprises a secondary port 12 having connected thereto a secondary capacitance 22 in parallel, and a secondary power switch 32. The transformer or autotransformer 10 connects the primary port 11 with the secondary port 12 via the primary power switch 31 and the secondary power switch 32.

The secondary winding 62 of the transformer or autotransformer 10 is configured to inject a secondary electric current $i_{sec}$ to the secondary port 12 through the secondary power switch 32. This current is determined by a specific voltage waveform applied to the primary winding of the transformer or autotransformer 10. Likewise, the first 31 and second 32 power switches are configured to be operated at the same time to transfer energy from the primary port 11 to the secondary port 12 through the transformer or autotransformer 10.

The purpose of the proposed power converter 1, as it was in the DPx previously described, is to transfer energy from an input voltage source 40 connected to the primary port 11 to a load 41 connected to the secondary port 22 through the transformer or autotransformer 10 using the minimum possible number of power switches, which is just one power switch 31 in the primary side 141 and just one power switch 32 in the secondary side 142. Moreover, these power switches 31, 32 conduct simultaneously during a high duty cycle d, which may be higher than 50% and eventually be around 95%; thus, the rms value of the current in both primary 141 and secondary 142 sides is reduced. Note that conduction losses are proportional to the square value of the rms current. The duty cycle is only limited by the fact that the higher the value of the duty cycle, the higher the voltage applied to the power switch, so there is a design trade-off.

The additional characteristics of this invention are the capability to regulate the gain of the power converter 1 and the capability to supply load current steps from one switching cycle to the next.

Both characteristics are obtained by applying the specific voltage waveform to the primary winding 61 of the transformer or autotransformer 10. This voltage waveform produces the desired current waveform in the secondary winding 62 of the transformer or autotransformer 10, which is injected to the secondary port 12.

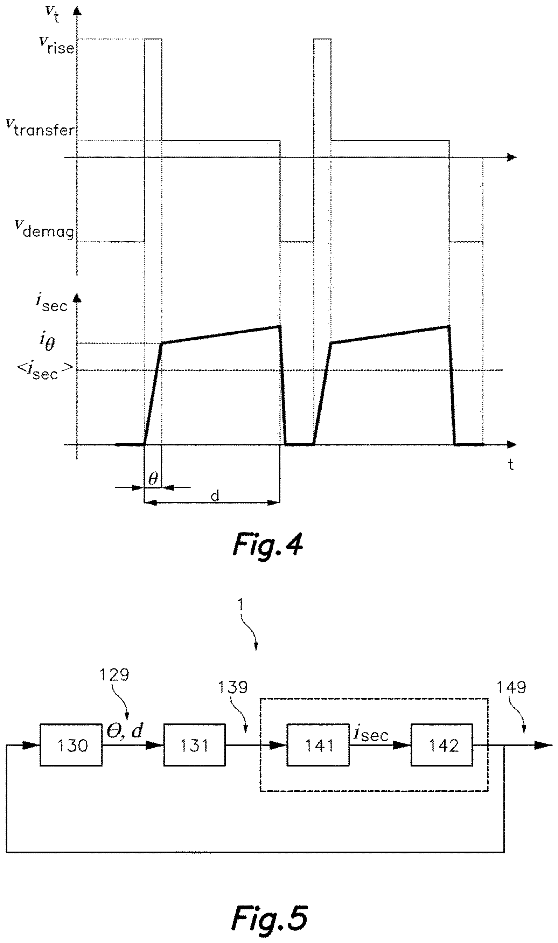

More specifically, in the proposed power converter 1, the primary 31, secondary 32, and third 33 power switches are adapted/configured to apply said voltage waveform (that comprises a sequence of voltages, see Fig. 4) to the primary winding 61 of the transformer or autotransformer 10. Particularly, the sequence of voltages comprises a first voltage, termed $v_{rise}$, that is higher than a voltage in the primary port 11, to produce a positive derivative of the secondary electric current $i_{sec}$ during a first interval; a second voltage, termed $v_{transfer}$, that is equal to the voltage in the primary port 11, to transfer energy from the primary port 11 to the third port 13 during a second interval, a duty cycle d being the addition of the first interval θ plus the second interval; and a third negative voltage, termed $v_{demag}$, to produce a negative derivative of the secondary electric current $i_{sec}$ and to demagnetize the transformer or autotransformer 10 during a third interval, referred as 1 - *d*.

In the waveforms of Fig. 4, the first interval θ and the duty cycle dare used as control variables of the power converter 1, since an increase in any of them changes the charge injected to the secondary port 12. Both are nondimensional variables representing time percentages of the switching period (T = 1/$f_{sw}$).

As shown in Fig. 4, the first interval θ and the duty cycle *d* can be adapted/configured to adjust the mean value of the secondary electric current $i_{sec}$ to the current of the load 41, and to adjust the voltage of the third port 13. Particularly, this can be done by executing the following equation:

$$d = \frac{v_{demag} - \theta \cdot (v_{rise} - v_{transfer})}{v_{transfer} + v_{demag}},$$

where:

$$v_{rise} = f(v_{port1}, v_{port3}, v_{port2})$$
$$v_{transfer} = g(v_{port1}, v_{port3}, v_{port2})$$
$$v_{demag} = h(v_{port1}, v_{port3}, v_{port2}).$$

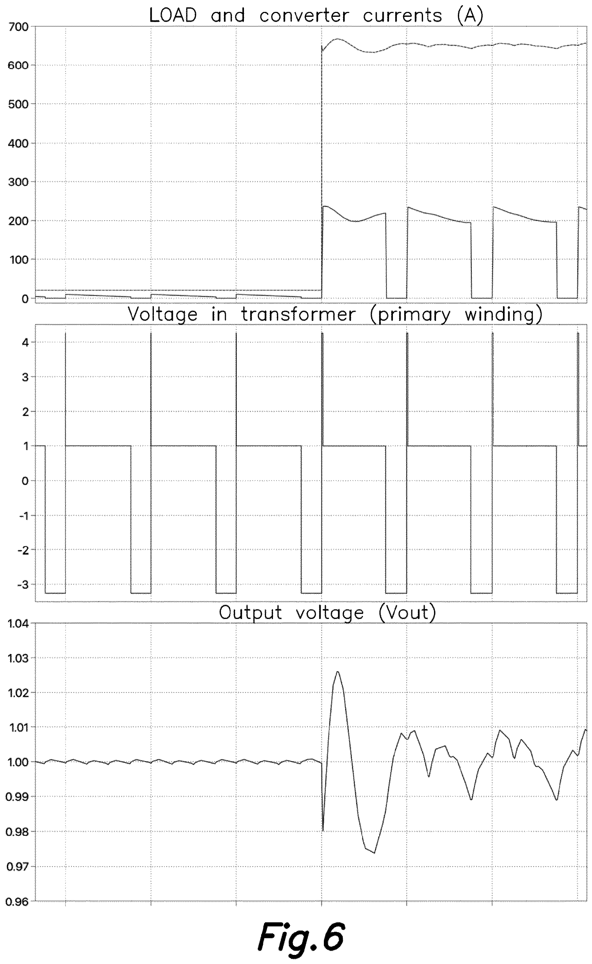

Furthermore, θ and *d* can be configured to change the adjusted mean value of the secondary electric current $i_{sec}$, in particular, from a switching cycle of the switching frequency of the power converter 1 to the next switching cycle (see Fig. 6).

Fig. 5 shows an embodiment of the control architecture controlling the power converter 1. The working principle of the control circuit is explained below.

As seen in the figure, a regulator 130 and a modulator 131 are used in this case. The regulator 130 is the element of the control circuit that computes the control variables θ and *d* 129. In particular, this is done based on sensed output, input or internal variables 149, e.g. an output voltage of the converter ($V_{out}$), an output power

(P), a voltage in the third port or in a clamp capacitor ($V_c$), etc. of the power converter 1. The modulator 131 is connected to the regulator 130, and is configured to receive the computed control variables 129 and to generate the driving signals 139 of all the power switches 31, 32, 33. These driving signals produce the current in the secondary winding 62 through the primary side 141 of the power stage. The current in the secondary winding 62 is injected to the secondary side 142 of the power stage completing the power conversion.

The primary 31, secondary 32, and third 33 power switches can include any controllable switch such as Metal-Oxide-Semiconductor Field Effect Transistors (MOSFET). In other embodiments, the power switches can include simple diodes and the like.

It should be understood that if the power switches are MOSFET switches, the modulator 131 is adapted/configured to generate the driving signals 139 (i.e. logic control signals) to provide a conducting status on the switches and turn them to an ON and/or OFF state in order to apply the above-described sequence of voltages.

In case all the power switches included in the power converter 1 are MOSFET switches, the power converter 1 can implement a phase-shift configuration to enable Zero Voltage Switching (ZVS) to the primary 31 and third 32 power switches.

In Fig. 6 one of the key advantages of the present invention is shown, which is the capability to inject an instantaneous current step to the load 41, by means of a change in the control variable θ from one switching cycle to the next switching cycle. The immediate change in the control variable θ produces minimal deviation of the output voltage of the power converter 1, configured in this embodiment with four interleaved stacked primary sides, reducing the requirement for the secondary capacitance 22 of the power converter 1.

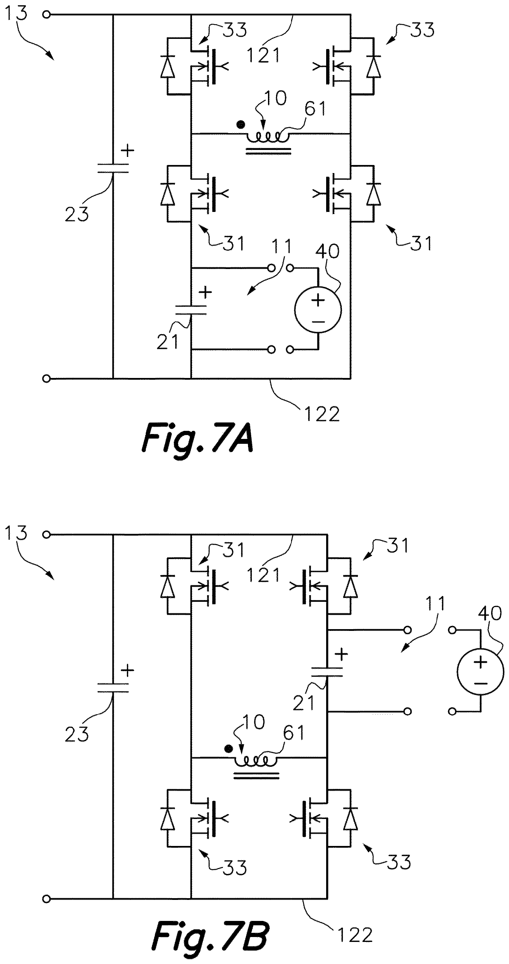

With reference now to Figs. 7A-7E, therein some possible example configurations of the primary side 141 are illustrated. In all these embodiments, the power converter 1 comprises two primary power switches 31 and two third power switches 33 that are connected through a full-bridge configuration.

In Figs. 7A and 7B, a voltage source 40 is connected to the primary port 11, which is connected in series with the two primary power switches 31, and the third port 13 is connected to the positive voltage rail 121 and to the negative voltage rail 122 of the full-bridge.

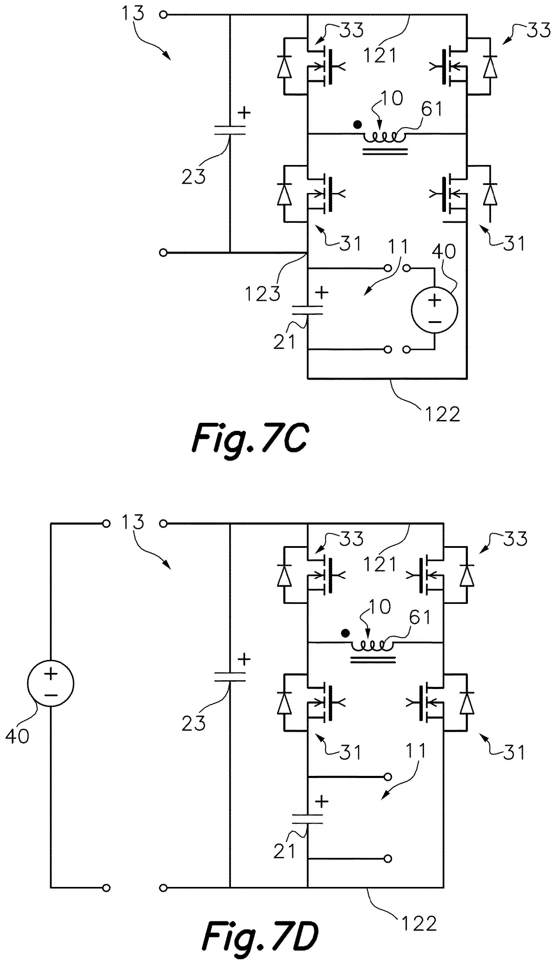

In Fig. 7C, different to the previous embodiments, the primary port 11 is connected in series with one of the two primary power switches 31, and the third port 13 is connected, via a connection point 123 of the primary port 11, with the primary power switches 31 and to the voltage rail 121 or 122 of the full-bridge connected to the two third power switches 33.

In the embodiments of figures 7A-7C, the voltage source 40 can be a DC voltage source or a rectified low frequency AC source.

In Fig. 7D, a DC voltage source 40 is connected to the third port 13. The energy transferred from the primary port 11 to the secondary port 12 is converted from the DC voltage source 40 to the primary capacitance 21 through the bridge configuration. Particularly, this power conversion is performed by means of the magnetizing inductance, configured to operate in a similar manner as a buck converter.

In general, depending on which port the voltage source and load are connected, the proposed power converter 1 converts the power in a manner that resembles the combination of a basic DC-DC converter cell, i.e. buck, boos or buck-boost, and a DPx.

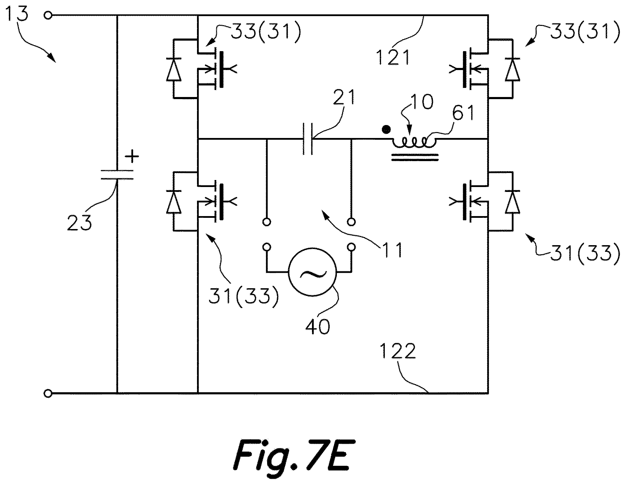

Finally, in Fig. 7E, an AC voltage source 40 is connected to the primary port 11, which is connected in series with the transformer or autotransformer 10 and the third port 13 is connected to the positive voltage rail 121 and to the negative voltage rail 122 of the full-bridge.

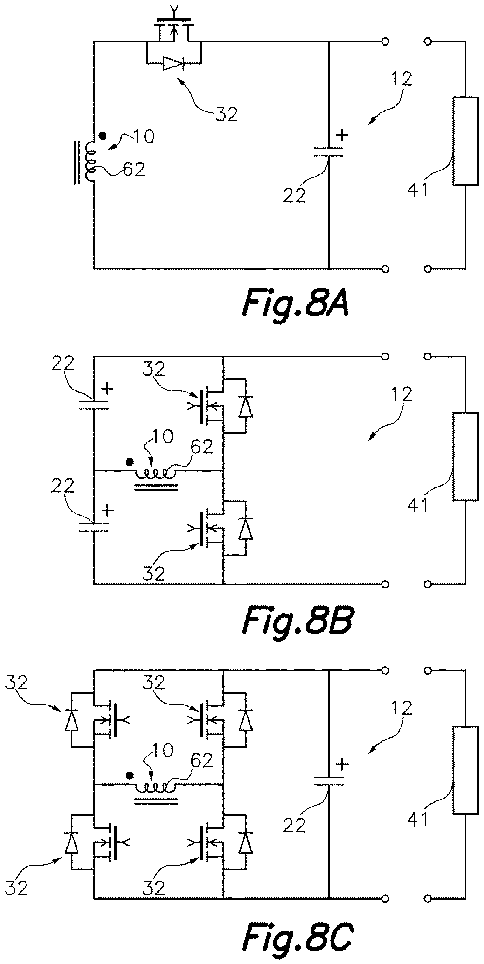

In Fig. 8A-8C some possible example configurations of the secondary side 142 are also shown. Particularly, in Fig. 8A, the secondary power switch 32 is connected in series with the secondary winding 62 of the transformer or autotransformer 10 and with the secondary port 12. In the embodiment illustrated in Fig. 8B, two secondary power switches 32 and two secondary capacitances 22 are present. In this case, the secondary winding 62 of the transformer or autotransformer 10, the two secondary power switches 32, and two secondary capacitances 22 are connected through a half-bridge configuration. In contrast, in Fig. 8C, four secondary power switches 32 are used. In this case, the secondary winding 62 of the transformer or autotransformer 10 and the four secondary power switches 32 are connected through a full-bridge configuration.

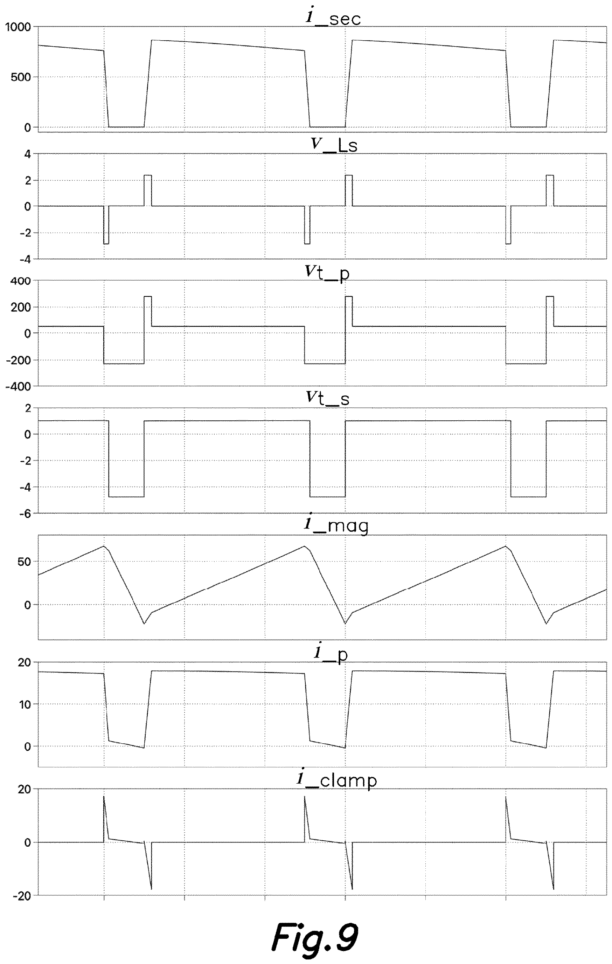

In Fig. 9, besides the voltage in the primary winding 61 that drives the current in the secondary winding 62, some additional waveforms are illustrated: the voltage in the leakage inductance is consistent with the current in the secondary winding 62. The magnetizing current is consistent with magnetization and demagnetization voltage waveform. The current in the primary winding 61 is the sum of the secondary electric current $i_{sec}$ plus the magnetizing current. Finally, the current in the third port 13 has zero mean value because the port operates as a clamp capacitor.

It should be noted that the power converter 1 can regulate the voltage gain as an improved characteristic compared to the DPx converter that has fixed gain. The regulation is performed by adjusting the two control variables (i.e. θ and $d$). An increase of any of them produces an increase of the charge injected to the secondary port 12, which produces an increase of the output voltage in case of a resistive load or an increase of the output power in case of a battery or any load with a defined voltage.

In the figure, in the slope of the waveform of the secondary electric current $i_{sec}$ during the second interval it can be observed whether the power converter 1 is operating with gain higher or lower than one (adjusted by transformer turns ratio). For an input voltage referred to secondary side 142 higher than the output voltage the slope is positive, whereas for a lower input voltage the slope is negative. In fact, the series element which enables voltage gain in the power converter 1 is the leakage inductance of the transformer or autotransformer 10.

Even though not depicted in the figures, it is important to note that the proposed power converter 1 has the potential to incorporate multiple primary ports 11 stacked or paralleled together and/or multiple secondary ports 12 stacked or paralleled together. An advantage of stacked primary ports is that a phase shift may be included, such that the input and output current and voltage ripple of the DC-DC converter is reduced.

Additionally, even though not depicted in the figures, it is important to note that the proposed power converter 1 has the potential to transfer power among the three ports 11, 12 and 13 in any direction, being a multiple bi-directional power converter.

The applications described above are DC-DC converters with high voltage gain and very fast dynamic response. The third port 13 is used to generate a voltage that enables the voltage waveform applied in the primary winding 61 of the transformer or autotransformer 10. In any case, they are two-port DC-DC converters.

Moreover, the presence of the additional third port 13 enables a power flow to or from this third port 13, which it has further applicability as it enables multi-port converters in general.

One example are energy buffered converters, in which a storage capacitor is connected to one of the ports. Similarly, one specific application of energy buffered converters are AC-DC converters with power factor correction, in which a storage capacitor is required to balance the low frequency (50Hz or 60Hz line frequency) pulsating power taken from the AC line voltage with the constant power delivered to the load.

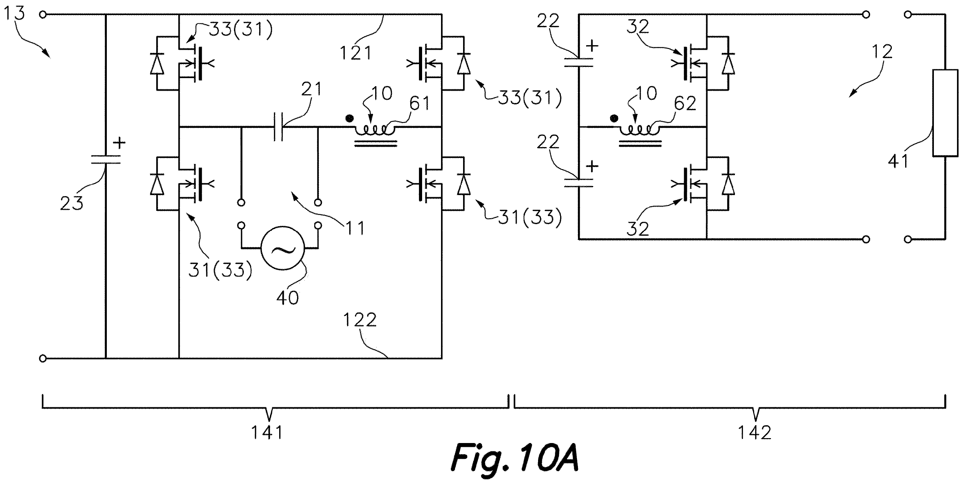

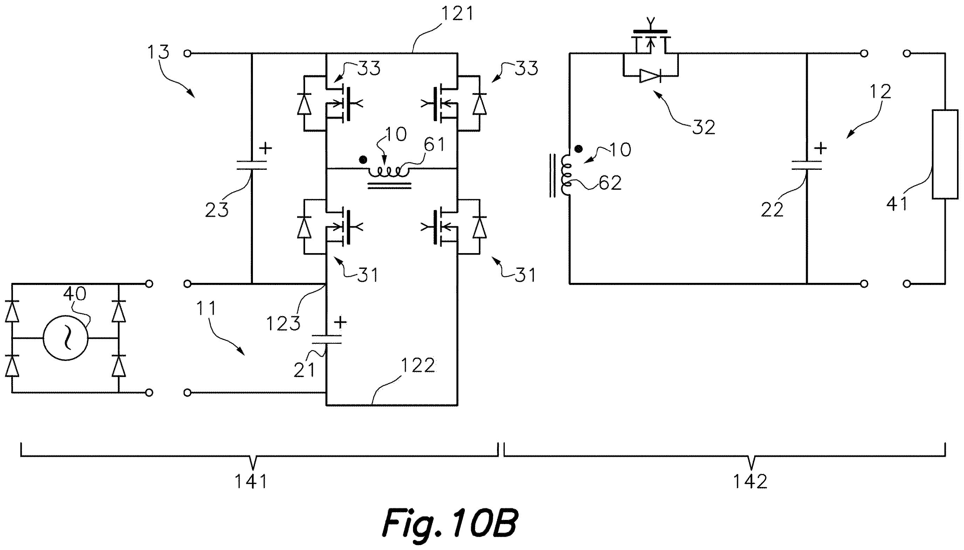

In Figs. 10A and 10B other two embodiments of the proposed power converter 1 are illustrated. In both these embodiments the power converter 1 can operate as an AC-DC converter with power factor correction by the third capacitance 23 connected to the third port 13 operating as a storage capacitor, and by adjusting θ and *d* to regulate the output voltage of the power converter 1 in the secondary port 12 and the input current of the primary port 11, namely, to be proportional to the input voltage.

In particular, in Fig. 10A, the primary side 141 comprises two primary power switches 31 and two third power switches 33 that are connected through a full-bridge configuration, being the primary port 11 connected in series with the transformer or autotransformer 10, and the third port 13 connected to the positive voltage rail 121 and to the negative voltage rail 122 of the full-bridge. The secondary port 12 comprises two secondary power switches 32 and two secondary capacitances 22 that are connected through a half-bridge configuration with the secondary winding of the transformer or autotransformer 10.

In the embodiment of Fig. 10B, on the other hand, the primary port 11 is connected in series with the primary power switches 31, and the third port 13 is connected, via the connection point 123 of the primary port 11, with the primary power switches 31 and with the voltage rail 121 or 122 of the full-bridge connected to the third power switches 33, the voltage of the primary port 11 being a DC voltage or a rectified low frequency AC voltage. The secondary side 142 comprises a series connection of the secondary power switch 32, secondary winding 62 of the transformer or autotransformer 10, and the secondary port 12, the latter being also connected to the load 41.

In the embodiments of Figs. 10A and 10B, θ and *d* can be configured to regulate the voltage of the secondary port 12 and the current of the primary port 11. This current in AC-DC applications with power factor correction can be adjusted to be proportional to the voltage of the primary port 11.

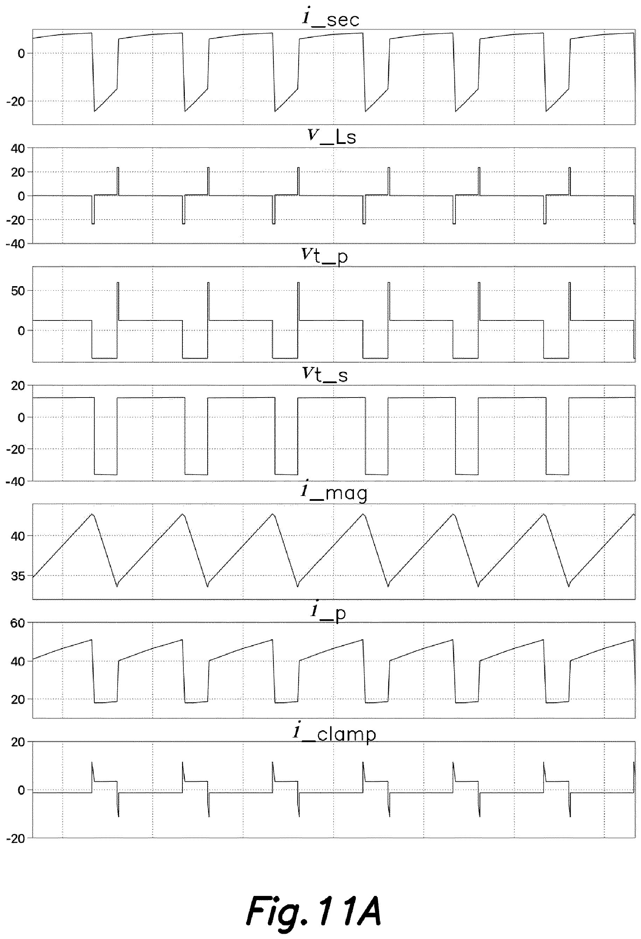

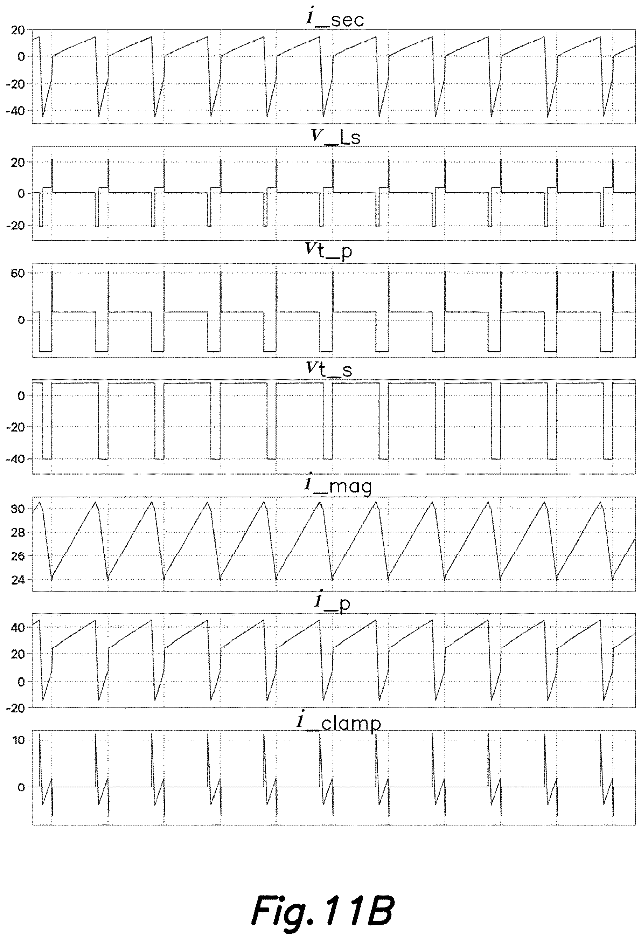

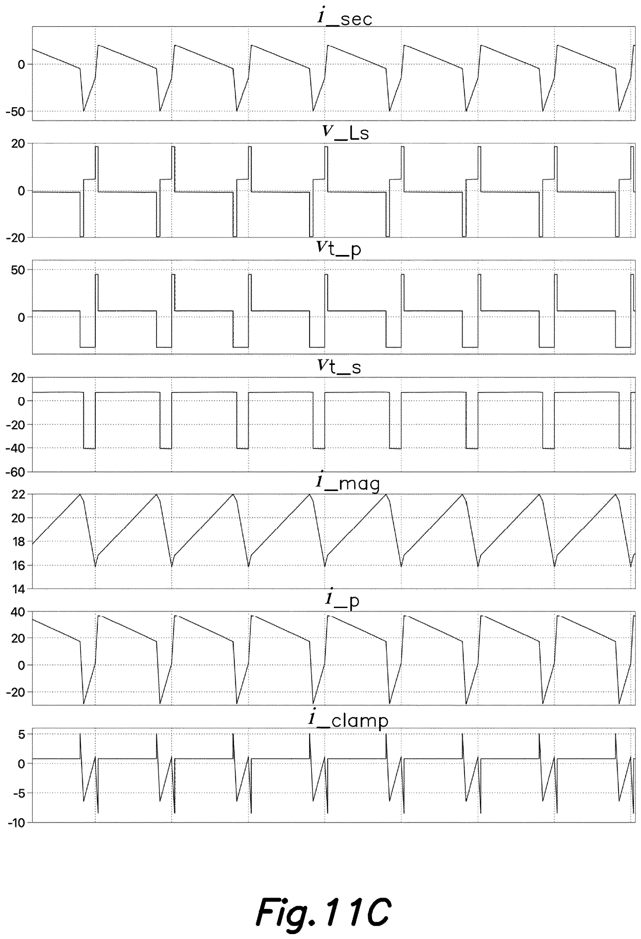

Figs. 11A-11C illustrate the voltage and current waveforms of the embodiment of Fig. 10A, for different conduction angles 30°, 45° and 90° of the line frequency (50Hz) to show that the three-port power converter 1 can operate with different power levels and direction of the power in the ports 11, 12, 13. Note that the power taken by the primary port 11 from the AC line is a pulsating power going from 0W to twice the DC output power supplied to the load 41 in the secondary port 12. The difference between input power and output power must be absorbed and released by the third capacitance 23 connected to the third port 13, acting as a storage capacitor.

The embodiments described above are to be understood as a few illustrative examples of the present invention. It will be understood by those skilled in the art that various modifications, combinations and changes may be made to the embodiments without departing from the scope of the present invention. In particular, different part solutions in the different embodiments can be combined in other configurations, where technically possible.

The scope of the present invention is defined in the claims that follow.

**Claims**

1. A switch mode electrical power converter, comprising:

     a primary port (11) including at least one primary capacitance (21) in parallel;
     a secondary port (12) including at least one secondary capacitance (22) in parallel;
     at least one primary power switch (31);
     at least one secondary power switch (32); and
     a transformer or autotransformer (10) to connect the primary port (11) with the secondary port (12) through the primary power switch (31) and the secondary power switch (32);

a mean voltage of the transformer or autotransformer (10) being zero in steady state,

a secondary winding (62) of the transformer or autotransformer (10) being configured to inject a secondary electric current ($i_{sec}$) to the secondary port (12) through the secondary power switch (32), and

the primary power switch (31) and the secondary power switch (32) being configured to conduct simultaneously to transfer energy from the primary port (11) to the secondary port (12) through the transformer or autotransformer (10);

**characterized in that:**

the switch mode electrical power converter (1) further comprises at least one third port (13) including at least one third capacitance (23) in parallel, and at least one third power switch (33); and

the primary power switch (31), secondary power switch (32) and third power switch (33) are configured to apply to a primary winding (61) of the transformer or autotransformer (10):

a) a voltage ($v_{rise}$) higher than a voltage in the primary port (11), to produce a positive derivative of the secondary electric current ($i_{sec}$) during a first interval ($\theta$),

b) a voltage ($v_{transfer}$) equal to the voltage in the primary port (11), to transfer energy from the primary port (11) to the secondary port (12) during a second interval, a duty cycle (d) being the addition of the first interval ($\theta$) plus the second interval, and

c) a negative voltage ($v_{demag}$) to produce a negative derivative of the secondary electric current ($i_{sec}$) and to demagnetize the transformer or autotransformer (10) during a third interval, which is referred to as 1 minus the duty cycle (d).

2. The switch mode electrical power converter of claim 1, wherein the at least one primary power switch (31) and the at least one third power switch (33) are configured to apply said voltages in a), b) and c) based on driving signals (139) that turn the primary power switch (31) and the third power switch (33) to an ON and/or OFF state, said driving signals (139) being generated by a modulator (131) that is configured to receive the first interval ($\theta$) and the duty cycle (d) as inputs, the first interval ($\theta$) and the duty cycle (d) being calculated by a regulator (130) based on sensed output, input or internal variables (149) of the switch mode electrical power converter (1).

3. The switch mode electrical power converter of claim 2, wherein the at least one secondary power switch (32) is configured to apply said voltages in a), b) and c) based on driving signals (139) that turn the secondary power switch (32) to an ON and/or OFF state, said driving signals (139) having a phase-shift to enable zero voltage switching, ZVS, in the primary power switch (31) and the third power switch (33).

4. The switch mode electrical power converter of any one of the previous claims, wherein the secondary port (12) further comprises a load (41) connected thereto, the first interval ($\theta$) and the duty cycle (d) being configured to adjust the mean value of the secondary electric current ($i_{sec}$) to a load current, and to adjust a voltage of the third port (13) using the following equation:

$$d = \frac{v_{demag} - \theta \cdot (v_{rise} - v_{transfer})}{v_{transfer} + v_{demag}},$$

where:

$v_{rise} = f(v_{port1}, v_{port3}, v_{port2})$
$v_{transfer} = g(v_{por}, v_{port3}, v_{port2})$
$v_{demag} = h(v_{port1}, v_{port3}, v_{port2})$.

5. The switch mode electrical power converter of claim 4, wherein the first interval ($\theta$) and the duty cycle (d) are further configured to change the adjusted mean value of the secondary electric current ($i_{sec}$) from a switching cycle of a switching frequency of the switched mode electrical power converter (1) to a next switching cycle.

6. The switch mode electrical power converter of any one of the previous claims, comprising two primary power switches (31) and two third power switches (33), the primary power switches (31) and the third power switches (33) being connected through a full-bridge configuration, wherein the primary port (11) is connected in series with the primary power switches (31), and the third port (13) is connected to a positive voltage rail (121) and a negative voltage rail (122) of the full-bridge.

7. The switch mode electrical power converter of any one of the previous claims 1 to 5, comprising two primary power switches (31) and two third power switches (33), the primary power switches (31) and the third power switches (33) being connected through a full-bridge configuration, wherein the primary port (11) is connected in series with the primary power switches (31), and the third port (13) is connected, via a connection point (123) of the primary port (11), with the primary power switches (31), and to a voltage rail (121 or 122) of the full-bridge connected to the third power switches (33), wherein the voltage of the primary port (11) is a DC voltage or a rectified low frequency AC voltage.

8. The switch mode electrical power converter of any one of the previous claims 1 to 5, comprising two primary power switches (31) and two third power switches (33), the primary power switches (31) and the third power switches (33) being connected through a full-bridge configuration, wherein the third port (13) is connected to a DC voltage source (40), wherein the energy transferred from the primary port (11) to the secondary port (12) is converted from the DC voltage source (40) to the primary capacitance (21) through the full-bridge configuration.

9. The switch mode electrical power converter of any one of the previous claims 1 to 5, comprising two primary power switches (31) and two third power switches (33), the primary power switches (31) and the third power switches (33) being connected through a full-bridge configuration, wherein the primary port (11) is connected to an AC voltage source and in series with the transformer or autotransformer (10) and the third port (13) is connected to a positive voltage rail (121) and a negative voltage rail (122) of the full-bridge.

10. The switch mode electrical power converter of any one of the previous claims, wherein the secondary power switch (32) is connected in series with the secondary winding (62) of the transformer or autotransformer (10) and the secondary port (12).

11. The switch mode electrical power converter of any one of the previous claims 1 to 9, comprising two secondary power switches (32) and two secondary capacitances (22), wherein the secondary winding (62) of the transformer or autotransformer (10), the two secondary power switches (32) and the two secondary capacitances (22) are connected through a half-bridge configuration.

12. The switch mode electrical power converter of any one of the previous claims 1 to 9, comprising four secondary power switches (32), wherein the secondary winding (62) of the transformer or autotransformer (10) and the four secondary power switches (32) are connected through a full-bridge configuration.

13. The switch mode electrical power converter of claim 4, wherein:

   a primary side (141) comprises two primary power switches (31) and two third power switches (33), the primary power switches (31) and the third power switches (33) being connected through a full-bridge configuration, wherein the primary port (11) is connected to an AC voltage source and in series with the transformer or autotransformer (10) and the third port (13) is connected to a positive voltage rail (121) and a negative voltage rail (122) of the full-bridge;
   a secondary side (142) comprises two secondary power switches (32) and two secondary capacitances (22), the secondary winding (62) of the transformer or autotransformer (10), the two secondary power switches (32) and the two secondary capacitances (22) being connected through a half-bridge configuration, which is connected to the load (41); and
   the first interval ($\theta$) and the duty cycle (d) are configured to regulate a voltage of the secondary port (12) and a current of the primary port (11).

14. The switch mode electrical power converter of claim 4, wherein:

   a primary side (141) comprises two primary power switches (31) and two third power switches (33), the primary power switches (31) and the third power switches (33) being connected through a full-bridge configuration, wherein the primary port (11) is connected in series with the primary power switches (31), and the third port (13) is connected, via a connection point (123) of the primary port (11), with the primary power switches (31), and to the voltage rail of the full-bridge connected to the third power switches (33), wherein the voltage of the primary port (11) is a DC voltage or a rectified low frequency AC voltage;
   a secondary side (142) comprises the secondary power switch (32) connected in series with the secondary winding (62) of the transformer or autotransformer (10) and the secondary port (12), and
   the first interval ($\theta$) and the duty cycle (d) are configured to regulate a voltage of the secondary port (12) and a current of the primary port (11).

15. The switch mode electrical power converter of any one of the previous claims, comprising a plurality of stacked or parallel primary ports (11) and/or a plurality of stacked or parallel secondary ports (12)

**Fig.1   Prior   Art**

**Fig.2   Prior   Art**

*Fig.3A*

*Fig.3B*

Fig.4

Fig.5

Fig.6

Fig.7A

Fig.7B

**Fig.7C**

**Fig.7D**

*Fig.7E*

Fig.8A

Fig.8B

Fig.8C

*Fig.9*

*Fig. 10A*

*Fig.10B*

EP 4 507 179 A1

*Fig.11A*

*Fig. 11B*

*Fig.11C*

Europäisches
Patentamt

European
Patent Office

Office européen
des brevets

# EUROPEAN SEARCH REPORT

Application Number

EP 23 38 2840

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ALOMARI SARA ET AL: "Modeling and Control of Multi-Port DC/DC Converter", 2019 IEEE 28TH INTERNATIONAL SYMPOSIUM ON INDUSTRIAL ELECTRONICS (ISIE), IEEE, 12 June 2019 (2019-06-12), pages 920-925, XP033585777, DOI: 10.1109/ISIE.2019.8781105 [retrieved on 2019-07-29] | 1-3, 10-12,15 | INV. H02M3/335 |
| A | * page 920 - page 922; figures 3,4 * | 4-9,13, 14 | |
| A | EP 4 054 064 A1 (DIFFERENTIAL POWER SL [ES]) 7 September 2022 (2022-09-07) * paragraph [0018] - paragraph [0040]; figures 10, 13 * | 1-15 | |
| A | ALLUHAYBI KHALIL ET AL: "Design and Implementation of Dual-input Microinverter for PV-Battery Applications", 2020 IEEE APPLIED POWER ELECTRONICS CONFERENCE AND EXPOSITION (APEC), IEEE, 15 March 2020 (2020-03-15), pages 1467-1474, XP033784612, DOI: 10.1109/APEC39645.2020.9124118 [retrieved on 2020-06-23] * the whole document * | 1-15 | **TECHNICAL FIELDS SEARCHED (IPC)** |
| | | | H02M |
| A | HU WENFEI ET AL: "A full-bridge three-port converter for renewable energy application", 2014 IEEE APPLIED POWER ELECTRONICS CONFERENCE AND EXPOSITION - APEC 2014, IEEE, 16 March 2014 (2014-03-16), pages 57-62, XP032591020, DOI: 10.1109/APEC.2014.6803289 [retrieved on 2014-04-21] * the whole document * | 1-15 | |

-/--

The present search report has been drawn up for all claims

| Place of search | Date of completion of the search | Examiner |
|---|---|---|
| Munich | 19 January 2024 | Kruip, Stephan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

**Europäisches Patentamt**
**European Patent Office**
**Office européen des brevets**

# EUROPEAN SEARCH REPORT

Application Number

EP 23 38 2840

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2022/416674 A1 (COBOS MARQUEZ JOSE ANTONIO [ES]) 29 December 2022 (2022-12-29) * corresponding to the document cited in the application; the whole document * | 1-15 | |
| A | SOO-SEOK KIM ET AL: "The Active Clamp Sepic- Flyback Converter", POWER ELECTRONICS SPECIALISTS CONFERENCE, 2005. PESC '05. IEEE 36TH, IEEE, PISCATAWAY, NJ, USA, 12 June 2005 (2005-06-12), pages 1209-1212, XP010883365, DOI: 10.1109/PESC.2005.1581783 ISBN: 978-0-7803-9033-1 * the whole document * | 1-15 | |

TECHNICAL FIELDS
SEARCHED (IPC)

The present search report has been drawn up for all claims

| Place of search | Date of completion of the search | Examiner |
|---|---|---|
| Munich | 19 January 2024 | Kruip, Stephan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 38 2840

This annex lists the patent family members relating to the patent documents cited in the above-mentioned European search report.
The members are as contained in the European Patent Office EDP file on
The European Patent Office is in no way liable for these particulars which are merely given for the purpose of information.

19-01-2024

| Patent document cited in search report | | Publication date | Patent family member(s) | | Publication date |
|---|---|---|---|---|---|
| EP 4054064 | A1 | 07-09-2022 | EP | 4054064 A1 | 07-09-2022 |
| | | | EP | 4256686 A1 | 11-10-2023 |
| | | | WO | 2022184897 A1 | 09-09-2022 |
| US 2022416674 | A1 | 29-12-2022 | CN | 114930703 A | 19-08-2022 |
| | | | EP | 4059128 A1 | 21-09-2022 |
| | | | JP | 2023502975 A | 26-01-2023 |
| | | | KR | 20220101673 A | 19-07-2022 |
| | | | US | 2022416674 A1 | 29-12-2022 |
| | | | WO | 2021094077 A1 | 20-05-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 4059128 A